(19) Europäisches Patentamt
European Patent Office
Office européen des brevets

(11) EP 4 226 767 A1

(12) EUROPEAN PATENT APPLICATION

(43) Date of publication:
16.08.2023 Bulletin 2023/33

(21) Application number: 22156708.4

(22) Date of filing: 15.02.2022

(51) International Patent Classification (IPC):
*A01N 25/02* (2006.01) *A01N 25/20* (2006.01)
*A01N 37/02* (2006.01) *A01P 1/00* (2006.01)

(52) Cooperative Patent Classification (CPC):
**A01N 37/02; A01N 25/02; A01N 25/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **The Procter & Gamble Company**
**Cincinnati, OH 45202 (US)**

(72) Inventors:
- **NATOLI, Sean Nicholas**
  **Cincinnati, 45202 (US)**
- **PANANDIKER, Rajan Keshav**
  **Cincinnati, 45202 (US)**
- **MIRACLE, Gregory Scot**
  **Cincinnati, 45202 (US)**
- **SCHUBERT, Beth Ann**
  **Cincinnati, 45202 (US)**
- **WHITING, Patrick Brian**
  **Cincinnati, 45202 (US)**
- **CASERTA, Justin Angelo**
  **Cincinnati, 45202 (US)**

(74) Representative: **P&G Patent Belgium UK**
**N.V. Procter & Gamble Services Company S.A.**
**Temselaan 100**
**1853 Strombeek-Bever (BE)**

# (54) ANTIMICROBIAL COMPOSITION

(57) An antimicrobial hard surface treatment composition comprising an antimicrobial system, the antimicrobial system comprising from about 0.01 to about 10% by weight of the composition of a surfactant selected from the group consisting of non-ionic, cationic, amphoteric and a mixture thereof; from about 0.01 to about 10% by weight of the composition of a non-aqueous solvent; and an antimicrobial agent comprising a modified amino acid according to Formula I, the composition further comprises at least 50% by weight of the composition of water and has a pH less than or equal to 7 as measured at 25°C.

EP 4 226 767 A1

## Description

FIELD OF THE INVENTION

The present invention is in the field of antimicrobial compositions. In particular, it relates to a hard surface treatment composition comprising an antimicrobial system which comprises a modified amino acid antimicrobial active.

BACKGROUND OF THE INVENTION

Antibacterial household compositions are becoming more widely used with a focus on kitchen, bath and toilet cleaning. In addition to the sanitization or disinfection the compositions are required to clean and/or provide shine to the treated surface. Although there exists a number of hard surface antimicrobial treatment compositions, there is a desire to find more efficient and more environmentally friendly compositions. Furthermore, the development of isotropic formulations with gentle, biodegradable actives is desirable.

There is therefore the need for an antibacterial treatment composition that has a good environmental and human safety profile, that shows strong antibacterial efficacy, that can be used on food contact surfaces and that shows good cleaning, even on tough greasy soils, and/or leaves the surfaces shiny and without streaks.

SUMMARY OF THE INVENTION

According to the first aspect of the present invention, there is provided an antimicrobial hard surface treatment composition.

According to the second aspect of the invention there is provided an article treated with the composition of the first aspect of the invention. The article is preferably in the form of any disposable or partially reusable substrate comprising one or more nonwoven layers. The article provides sanitization to surfaces, in particular hard surfaces. The article is sometimes herein referred to as "the article of the invention".

According to the third aspect of the present invention, there is provided a method of sanitizing a surface using the composition of the invention.

The elements of the composition of the invention described in relation to the first aspect of the invention apply *mutatis mutandis* to the other aspects of the invention.

DETAILED DESCRIPTION OF THE INVENTION

The present invention encompasses a hard surface treatment composition. The composition provides antimicrobial benefits. The composition comprises an antimicrobial system. The system comprises three components that combined provide a very effective antimicrobial action. The composition is an aqueous composition comprising at least 50% by weight of the composition of water.

As used herein, the phrase "chain atoms" means the sum of all atoms in an indicated group or moiety, excluding hydrogen atoms. The chain atoms may be in a linear configuration, a branched configuration, and/or a ring configuration.

All percentages, ratios and proportions used herein are by weight percent of the composition, unless otherwise specified. All average values are calculated "by weight" of the composition, unless otherwise expressly indicated. All ratios are calculated as a weight/weight level, unless otherwise specified.

All measurements are performed at 25°C unless otherwise specified.

Unless otherwise noted, all component or composition levels are in reference to the active portion of that component or composition, and are exclusive of impurities, for example, residual solvents or by-products, which may be present in commercially available sources of such components or compositions.

<u>Antimicrobial treatment composition</u>

The composition of the invention is suitable to be used on hard surfaces. The composition can be delivered onto the surface, by for example spraying the composition, followed by wiping the surface, preferably without rinsing or by using a substrate, such as a wipe impregnated with the composition of the invention. The composition provides good cleaning and/or shine to the treated surface. The composition can be a concentrated, that can be diluted before use or a ready to use composition. Preferably, a ready to use sprayable composition.

As used herein, the terms "microbe" or "microbial" should be interpreted to refer to any of the microscopic organisms studied by microbiologists or found in the use environment of a treated surface. Such organisms include, but are not limited to, bacteria and fungi as well as other single-celled organisms such as mould, mildew and algae. Viruses (enveloped and non-enveloped) and other infectious agents are also included in the term microbe.

"Antimicrobial" further should be understood to encompass both microbiocidal and microbiostatic properties. That is, the term includes microbe killing, leading to a reduction in number of microbes, as well as a retarding effect of microbial growth, wherein numbers may remain more or less constant (but nonetheless allowing for slight increase/ decrease).

For ease of discussion, this description uses the term antimicrobial to denote a broad-spectrum activity (e.g. against bacteria and fungi, or against bacteria and viruses). When speaking of efficacy against a particular microorganism or taxonomic rank, the more focused term will be used (e.g. antifungal to denote efficacy against fungal growth in particular). Using the above example, it should be understood that efficacy against fungi does not in any way preclude the possibility that the same antimicrobial composition may demonstrate efficacy against another class of microbes.

By "hard surface ", it is meant herein hard surfaces found in households, especially domestic households. Surfaces to be cleaned include kitchens and bathrooms, e.g., floors, walls, tiles, windows, cupboards, sinks, showers, shower plastified curtains, wash basins, WCs, fixtures and fittings and the like made of different materials like ceramic, vinyl, no-wax vinyl, linoleum, melamine, glass, steel, kitchen work surfaces, any plastics, plastified wood, metal or any painted or varnished or sealed surface and the like. Household hard surfaces also include household appliances including, but not limited to refrigerators, freezers, washing machines, automatic dryers, ovens, microwave ovens, dishwashers and so on. Such hard surfaces may be found both in private households as well as in commercial, institutional and industrial environments.

The compositions herein are aqueous compositions, comprising at least 50% by weight of the composition of water, preferably from 80% to 95% and more preferably from 90% to 96% by weight of the composition of water. Preferably, the compositions of the invention are clear compositions. Without wishing to be bound by theory, it is believed that in order to provide the best antimicrobial efficacy, the antimicrobial system should be in solution. The composition should preferably be in the form of a clear, isotropic liquid.

The compositions of the present invention preferably can be non-thickened, or water like, having a viscosity of from 1 mPa.s to 5 Pa.s, or can be thickened, having a viscosity of from 50 Pa.s to 1200 Pa.s, more preferably 100 Pa.s to 800 Pa.s, most preferably 200 Pa.s to 600 Pa.s when measured at 20°C with a AD 1000 Advanced Rheometer from Atlas® shear rate 10 $s^{-1}$ with a coned spindle of 40mm with a cone angle 2° and a truncation of $\pm 60\mu m$.

The pH of the composition helps with antimicrobial efficacy. The pH of the composition is equal or less than 7, preferably from 2 to 5 as measured at 25°C. Accordingly, the compositions herein can comprise a pH adjusting agent.

Antimicrobial system

The composition of the invention comprises an antimicrobial system comprising an antimicrobial agent. The antimicrobial agent needs only be present in germicidally effective amounts, which can be as little as 0.001% to less than 1% by weight of the composition. In more preferred compositions, the cleaning composition comprises the antimicrobial agent at a level of from from about 0.0025 to about 0.5%, more preferably from 0.005% to 0.15% by weight of the composition.

A germicidally effective amount of the antimicrobial agent typically results in at least a log 4 reduction of gram negative bacteria, using the method of EN13697 (Chemical Disinfectants Bactericidal Activity Testing), in 5 minutes.

Surfactant

The composition of the invention preferably comprises surfactants, more preferably from 0.01% to 10%, preferably from 0.05% to 8%, more preferably from 0.08% to 5%, more preferably 0.1% to 3% by weight of the composition of surfactant. The surfactant also contributes to the cleaning and/or shine provided by the composition.

Alkoxylated alcohol nonionic surfactants

Suitable alkoxylated alcohol nonionic surfactants are according to the formula $RO-(A)_nH$, wherein: R is a primary $C_4$ to $C_{18}$, preferably a $C_6$ to $C_{16}$, more preferably a $C_{10}$ to $C_{16}$ and even more preferably from $C_{12}$ to $C_{14}$ branched or linear alkyl chain, or a $C_6$ to $C_{28}$ alkyl benzene chain; A is an ethoxy or propoxy or butoxy unit, or mixtures thereof, and wherein n is an integer from 1 to 30, preferably from 1 to 15, more preferably from 3 to 12 even more preferably from 3 to 8. Preferred R chains for use herein are the $C_{10}$ to $C_{16}$ linear or branched alkyl chains. Especially preferred for use herein is an alcohol alkoxylated having a $C_{12}$-$C_{14}$ chain length and having from 8 to 10 ethoxy groups.

Suitable branched alkoxylated alcohols may be selected from the group consisting of: $C_4$-$C_{10}$ alkyl branched alkoxylated alcohols, and mixtures thereof. The branched alkoxylated alcohol can be derived from the alkoxylation of $C_4$-$C_{10}$ alkyl branched alcohols selected form the group consisting of: $C_4$-$C_{10}$ primary mono-alcohols having one or more $C_1$-$C_4$ branching groups.

By $C_4$-$C_{10}$ primary mono-alcohol, it is meant that the main chain of the primary mono-alcohol has a total of

from 4 to 10 carbon atoms. The $C_4$-$C_{10}$ primary mono-alcohol can be selected from the group consisting of: methyl butanol, ethyl butanol, methyl pentanol, ethyl pentanol, methyl hexanol, ethyl hexanol, propyl hexanol, dimethyl hexanol, trimethyl hexanol, methyl heptanol, ethyl heptanol, propyl heptanol, dimethyl heptanol, trimethyl heptanol, methyl octanol, ethyl octanol, propyl octanol, butyl octanol, dimethyl octanol, trimethyl octanol, methyl nonanol, ethyl nonanol, propyl nonanol, butyl nonanol, dimethyl nonanol, trimethyl nonanol and mixtures thereof.

The $C_4$-$C_{10}$ primary mono-alcohol can be selected from the group consisting of: ethyl hexanol, propyl hexanol, ethyl heptanol, propyl heptanol, ethyl octanol, propyl octanol, butyl octanol, ethyl nonanol, propyl nonanol, butyl nonanol, and mixtures thereof. Preferably the $C_4$-$C_{10}$ primary mono-alcohol is selected from the group consisting of: ethyl hexanol, propyl hexanol, ethyl heptanol, propyl heptanol, and mixtures thereof.

The $C_4$-$C_{10}$ primary mono-alcohol is most preferably ethyl hexanol, and propyl heptanol. Especially preferred for use herein are ethoxylated ethyl hexanol comprising from 4 to 10 ethoxy groups.

In the branched alkoxylated alcohol, the one or more $C_1$-$C_4$ branching group can be substituted into the $C_4$-$C_{10}$ primary mono-alcohol at a C1 to C3 position, preferably at the C1 to C2 position, more preferably at the C2 position, as measured from the hydroxyl group of the starting alcohol.

The branched alkoxylated alcohol can comprise from 1 to 14, preferably from 2 to 7, more preferably from 4 to 6 ethoxylate units, and optionally from 1 to 9, preferably from 2 to 7, more preferably from 4 to 6 of propoxylate units.

The branched alkoxylated alcohol is preferably 2-ethyl hexan-1-ol ethoxylated to a degree of from 4 to 6, and propoxylated to a degree of from 4 to 6, more preferably, the alcohol is first propoxylated and then ethoxylated. Another preferred branched alkoxylated alcohols are 2-alkyl-1-alkanols such as alkoxylated $C_{10}$ guerbet alcohols with 1 to 14, preferably from 2 to 7, more preferably from 3 to 6 ethoxylate or ethoxylate-propoxylate units.

Non-limiting examples of suitable branched alkoxylated alcohols are, for instance, Ecosurf® EH3, EH6, and EH9, commercially available from DOW, and Lutensol® XP alkoxylated Guerbet alcohols & Lutensol® XL ethoxylated Guerbet alcohols available from BASF.

Linear alcohol alkoxylated nonionic surfactants preferred herein are alkoxylated nonionic surfactants with a $C_8$, $C_{10}$, $C_{12}$, mixtures of $C_8$ to $C_{10}$, mixtures of $C_{10}$ to $C_{12}$, mixtures of $C_9$ to $C_{11}$ linear alkyl chain and 8 or less ethoxylate units, preferably 3 to 8 ethoxylate units.

Non-limiting examples of suitable linear alkoxylated nonionic surfactants for use herein are Dobanol® 91-2.5 (R is a mixture of $C_9$ and $C_{11}$ alkyl chains, n is 2.5), Dobanol® 91-5 (R is a mixture of $C_9$ to $C_{11}$ alkyl chains, n is 5); Dobanol® 91-10 (R is a mixture of $C_9$ to $C_{11}$ alkyl chains, n is 10); Greenbentine DE60 (R is a $C_{10}$ linear alkyl chain, n is 6); Marlipal 10-8 (R is a $C_{10}$ linear alkyl chain, n is 8); Neodol 91-8 (R is a mixture of $C_9$ to $C_{11}$ alkyl chains, n is 8); Empilan® KBE21 (R is a mixture of $C_{12}$ and $C_{14}$ alkyl chains, n is 21); Lutensol ON30 (R is $C_{10}$ linear alkyl chain, n is 3); Lutensol ON50 (R is $C_{10}$ linear alkyl chain, n is 5); Lutensol ON70 (R is $C_{10}$ linear alkyl chain, n is 7); Novel 610-3.5 (R is mixture of $C_6$ to $C_{10}$ linear alkyl chains, n is 3.5); Novel 810FD-5 (R is mixture of $C_8$ to $C_{10}$ linear alkyl chains, n is 5); Novel 10-4 (R is $C_{10}$ linear alkyl chain, n is 4); Novel 1412-3 (R is mixture of $C_{12}$ to $C_{14}$ linear alkyl chains, n is 3); Lialethl® 11-5 (R is a $C_{11}$ linear alkyl chain, n is 5); Lialethl® 11-21 (R is a mixture of linear and branched $C_{11}$ alkyl chain, n is 21), or mixtures thereof.

The alkoxylated nonionic surfactant may be a secondary alcohol ethoxylate such as for example the Tergitol™-15-S surfactants having the general formula shown below and commercially available from DOW

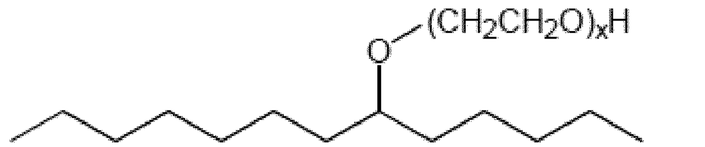

Alkyl carbon chain length = 11 to 15, X = 3 to 40

Tergitol 15-S surfactants Preferred secondary alcohol ethoxylate surfactants have 3-9 EO units.

Another suitable alkoxylated nonionic surfactant is an alkyl ethoxy alkoxy alcohol, preferably wherein the alkoxy part of the molecule is propoxy, or butoxy, or propoxy-butoxy. More preferred alkyl ethoxy alkoxy alcohols are of formula (II):

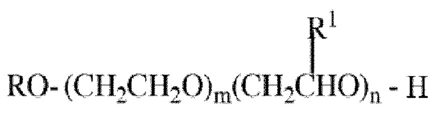

Formula (II)

wherein:

R is a branched or unbranched alkyl group having 8 to 16 carbon atoms;
$R^1$ is a branched or unbranched alkyl group having 1 to 5 carbon atoms;
n is an integer from 1 to 10; and m is an integer from 6 to 35.

R is preferably from 12 to 15, preferably 13 carbon atoms. $R^1$ is preferably a branched alkyl group having from 1 to 2 carbon atoms. n is preferably an integer from 1 to 5. m is preferably an integer from 8 to 25. Preferably, the weight average molecular weight of the ethoxylated alkoxylated nonionic surfactant of formula (II) is from 500 to 2000g/mol, more preferably from 600 to 1700 g/mol, most preferably 800 to 1500 g/mol.

The ethoxylated alkoxylated nonionic surfactant can be a polyoxyalkylene copolymer. The polyoxyalkylene copolymer can be a block-heteric ethoxylated alkoxylated nonionic surfactant, though block-block surfactants are preferred. Suitable polyoxyalkylene block copolymers include ethylene oxide/propylene oxide block polymers, of formula (III): (

$EO)_x(PO)_y(EO)_x$, or

(PO)x(EO)y(PO)x

wherein EO represents an ethylene oxide unit, PO represents a propylene oxide unit, and x and y are numbers detailing the average number of moles ethylene oxide and propylene oxide in each mole of product. Such materials tend to have higher molecular weights than most non-ionic surfactants, and as such can range between 1000 and 30000 g/mol, although the molecular weight should be above 2200 and preferably below 13000 to be in accordance with the invention. A preferred range for the molecular weight of the polymeric non-ionic surfactant is from 2400 to 11500 Daltons. BASF (Mount Olive, N.J.) manufactures a suitable set of derivatives and markets them under the Pluronic trademarks. Examples of these are Pluronic (trademark) F77, L62 and F88 which have the molecular weight of 6600, 2450 and 11400 g/mol respectively.

Other suitable ethoxylated alkoxylated nonionic surfactants are described in Chapter 7 of Surfactant Science and Technology, Third Edition, Wiley Press, ISBN 978-0-471-68024-6.

Most preferably the alkoxylated nonionic surfactant is selected from the group consisting of: 2-propylheptyl EO8 (Lutensol XL89-BASF); 2-propylheptyl EO5 (Lutensol XL50-BASF); $C_{10}$ alcohol EO5 (Lutensol ON 50-BASF); $C_{10}$ -alcohol EO7 (Lutensol ON 70-BASF); $C_8$-$C_{10}$ EO5 (Novel 810 FD5 Sasol); $C_{10}$ EO4 (Novel 10-4 Sasol); Tergitol 15-S-3; Tergitol 15-S-5; Tergitol 15-S-7; and Ethyl hexanol PO5EO6 (Ecosurf EH6-Dow). These surfactants have surprisingly been found to potentiate the antibacterial efficacy of the modified amino acids.

<u>Alkyl polyglucosides</u>

Alkyl polyglycosides are biodegradable nonionic surfactants which are well known in the art and can be used in the compositions of the present invention. Suitable alkyl polyglycosides can have the general formula $C_nH_{2n+1}O(C_6H_{10}O_5)_xH$ wherein n is preferably from 8 to 16, more preferably 8 to 14, and x is at least 1. Examples of suitable alkyl polyglucoside surfactants are the TRITON™ alkyl polyglucosides from Dow; Agnique PG, Disponil APG and Glucopon alkyl polyglucosides from BASF. Preferred alkyl polyglucoside surfactants are those where n is 8 to 12, more preferably 8 to 10, such as for example Triton™ CG50 (Dow). These surfactants have surprisingly been found to enhance the antimicrobial efficacy of the modified amino acids.

<u>Alkyl amine oxide</u>

Suitable amine oxide surfactants include: $R_1R_2R_3NO$ wherein each of $R_1$, $R_2$ and $R_3$ is independently a saturated or unsaturated, substituted or unsubstituted, linear or branched hydrocarbon chain having from 1 to 30 carbon atoms. Preferred amine oxide surfactants are amine oxides having the following formula: $R_1R_2R_3NO$ wherein R1 is a hydrocarbon chain comprising from 1 to 30 carbon atoms, preferably from 6 to 20, more preferably from 8 to 16 and wherein $R_2$ and $R_3$ are independently saturated or unsaturated, substituted or unsubstituted, linear or branched hydrocarbon chains comprising from 1 to 4 carbon atoms, preferably from 1 to 3 carbon atoms, and more preferably are methyl groups. R1 may be a saturated or unsaturated, substituted or unsubstituted linear or branched hydrocarbon chain.

Highly preferred amine oxides are $C_8$ dimethyl amine oxide, $C_{10}$ dimethyl amine oxide, $C_{12}$ dimethyl amine oxide, , $C_{14}$ dimethyl amine oxide, and mixtures thereof $C_8$ dimethyl amine oxide is commercially available under the trade name Genaminox® OC from Clariant; $C_{10}$ dimethyl amine oxide is commercially available under the trade name Genaminox® K-10 from Clariant; $C_{12}$ dimethyl amine oxide is commercially available under the trade name Genaminox® LA from Clariant and of Empigen OB from Huntsman; $C_{14}$ amine oxide is commercially available under the trade name of Empigen OH 25 from Huntsman. Other suitable amine oxide surfactants are cocoyldiethoxy amine oxide available

under the trade name of Genaminox CHE from Clariant, and cocamydopropyl amine oxide commercially available under the trade name of Empigen OS/A from Huntsman. Particularly preferred amine oxide surfactants are $C_{10}$ dimethyl amine oxide such as Genaminox K-10. These surfactants have surprisingly been found to greatly enhance the antibacterial efficacy of the modified amino acids.

Alkyl glucamide surfactants

The composition of the invention may comprise an alkyl glucamide surfactant. Glucamide surfactants are non ionic surfactants in which the hydrophilic moiety (an amino-sugar derivative) and the hydrophobic moiety (a fatty acid) are linked via amide bonds. This results in a chemical linkage, which is highly stable under alkaline conditions. Particularly preferred alkyl glucamide surfactants are N-alkyl-N-acylglucamides of the formula (III):

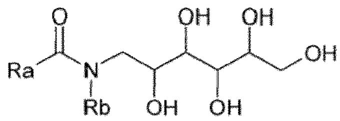

(III)

Wherein Ra is a linear or branched, saturated or unsaturated hydrocarbyl group having 6 to 22 carbon atoms, and Rb is a $C_1$-$C_4$ alkyl group. Particularly preferably, Rb in formula (I) is a methyl group. Non-limiting examples of these glucamide surfactants are: N-octanoyl-N-methylglucamide, N-nonanoyl-N-methylglucamide, N-decanoyl-N-methylglucamide, N-dodecanoyl-N-methylglucamide, N-cocoyl-N-methylglucamide, available under the trade name of GlucoPure Foam from Clariant, N-lauroyl/myristoyl-N-methylglucamide, (available under the trade name of GlucoPure Deg from Clariant, and N-octanoyl/decanoyl-N-methylglucamide, available under the trade name of GlucoPure Wet by Clariant.

Alkyl glucamine surfactants are suitable for the composition of the invention.

These surfactants are described in EP16184415 and US20190055496.

Zwitterionic and amphoteric surfactants

The hard surface cleaning composition may comprise an amphoteric surfactant, a zwitterionic surfactant, and mixtures thereof. Suitable zwitterionic surfactants typically contain both cationic and anionic groups in substantially equivalent proportions so as to be electrically neutral at the pH of use, and are well known in the art. Some common examples of zwitterionic surfactants are described in US. Pat. Nos. 2,082,275, 2,702,279 and 2,255,082.

Suitable zwitteronic surfactants include betaines such alkyl betaines, alkylamidobetaine, amidazoliniumbetaine, sulfobetaine (INCI Sultaines) as well as the phosphobetaine.

Suitable betaines are the alkyl betaines of the formula (Ia), the alkyl amido betaine of the formula (Ib), the sulfo betaines of the formula (Ic) and the amido sulfobetaine of the formula (Id);

R1-N+(CH3)2-CH2COO- (Ia)

R1-CO-NH(CH2)3-N+(CH3)2-CH2COO- (Ib)

R1-N+(CH3)2-CH2CH(OH)CH2SO3- (Ic)

R1-CO-NH-(CH2)3-N+(CH3)2-CH2CH(OH)CH2SO3- (Id)

in which R1 is a saturated or unsaturated $C_6$-$C_{22}$ alkyl residue, preferably $C_8$-$C_{18}$ alkyl residue. Particularly preferred are betaines of the formula Ia such as for example N-alkyl-N-dimethyl betaine like the one sold under the trade name of Empigen® BB by Huntsman.

If the composition comprises a zwitterionic surfactant, it is preferably a betaine of the formula Ia such as for example N-alkyl-N-dimethyl betaine like the one sold under the trade name of Empigen BB by Huntsman. It has been found these betaines greatly increase the antibacterial efficacy of the modified amino acids.

Amphoteric surfactants can be either cationic or anionic depending upon the pH of the composition. Suitable amphoteric surfactants include the products sold under the trade name Miranol by Solvay-Novecare such as, for example, sodium lauroamphoacetate (Miranol Ultra L-32E), sodium stearoampho acetate (Miranol DM), disodium cocoamphodiacetate (Miranol C2m Conc NP), disodium lauroamphodiacetate (Miranol BM Conc), disodium capryloampho dipropionate (Miranol JBS), sodium mixed $C_8$ amphocarboxylate (Miranol JEM Conc), and sodium capryloampho hydroxypropyl sulfonate (Miranol JS). Other non-limiting examples of suitable amphoteric surfactants are disodium capryloamphodiacetate (Mackam 2CY 75-Solvay Novecare), octyliminodipropionate (Ampholak YJH40-Akzo Nobel), sodium lauriminodipropionate (Mirataine H2C-HA-Solvay Novecare), and sodium lauroamphohydroxypropylsulfonate (Mackam LS-Solvay Novecare). Amphoteric surfactants might not impact negatively the antimicrobial efficacy of the modify amino acids.

Other suitable additional surfactants can be found in McCutcheon's Detergents and Emulsifiers, North American Ed. 1980.

Cationic Surfactant

The compositions disclosed herein may comprise a cationic surfactant. Non-limiting examples of cationic surfactants include: the quaternary ammonium surfactants, which can have up to 26 carbon atoms and may include alkoxylate quaternary ammonium (AQA) surfactants, dimethyl hydroxyethyl quaternary ammonium, and/or dimethyl hydroxyethyl lauryl ammonium chloride; polyamine cationic surfactants; cationic ester surfactants; amino surfactants, e.g., amido propyldimethyl amine (APA); and mixtures thereof.

Suitable cationic surfactants also may include alkyl pyridinium compounds, alkyl quaternary ammonium compounds, alkyl quaternary phosphonium compounds, alkyl ternary sulphonium compounds, and mixtures thereof.

Suitable cationic detersive surfactants are quaternary ammonium compounds having the general formula:

$$(R)(R_1)(R_2)(R_3)N^+ X^-$$

wherein, R is a linear or branched, substituted or unsubstituted $C_{6-18}$ alkyl or alkenyl moiety, $R_1$ and $R_2$ are independently selected from methyl or ethyl moieties, $R_3$ is independently selected from a linear or branched, substituted or unsubstituted $C_{6-18}$ alkyl or alkenyl moiety or a hydroxyl, hydroxymethyl or a hydroxyethyl moiety, X is an anion which provides charge neutrality, suitable anions include: halides, for example chloride; sulphate; and sulphonate. Suitable cationic surfactants are mono-$C_{6-18}$ alkyl mono-hydroxyethyl di-methyl quaternary ammonium chlorides. Highly suitable cationic surfactants are di-$C_{8-10}$ alkyl di-methyl quaternary ammonium chloride, mono-$C_{16}$ alkyl tri-methyl quaternary ammonium chloride, di-$C_{10-12}$ alkyl di-methyl quaternary ammonium chloride and mono-Cio alkyl mono-hydroxyethyl di-methyl quaternary ammonium chloride.

Anionic surfactants

Preferably, the composition is free of anionic surfactants. By "free of anionic surfactant" is herein meant that the composition comprises less than 0.05% by weight of the composition of anionic surfactant.

Particularly preferred surfactants for use herein include nonionic surfactants, in particular branched alcohol alkoxylates, more in particular 2-ethyl hexan-1-ol ethoxylated to a degree of from 4 to 6, and propoxylated to a degree of from 4 to 6, more preferably, the alcohol is first propoxylated and then ethoxylated, and 2-alkyl-1-alkanols such as alkoxylated $C_{10}$ guerbet alcohols with 1 to 14, preferably 2 to 8, more preferably 3 to 6 ethoxylate or ethoxylate-propoxylate units. Other particularly preferred non-ionic surfactants include linear alcohol alkoxylated nonionic surfactants with $C_8$, $C_{10}$, $C_{12}$, $C_{14}$ mixtures of $C_8$ to $C_{10}$, mixtures of $C_{10}$ to $C_{12}$, mixtures of $C_{12}$ to $C_{14}$, mixtures of $C_9$ to $C_{11}$ linear alkyl chain and 10 or less ethoxylate units, preferably 3 to 9 ethoxylate units. Most preferably the alkoxylated nonionic surfactant is selected from the group consisting of: $C_{12}$-$C_{14}$ alcohol EO9 (Surfonic L 24-9), 2-propylheptyl EO8 (Lutensol XL89-BASF); 2-propylheptyl EO5 (Lutensol XL50-BASF); $C_{10}$ alcohol EO5 (Lutensol ON 50-BASF); $C_{10}$ alcohol EO7 (Lutensol ON 70-BASF); $C_8$-$C_{10}$ alcohol EO5 (Novel 810 FD5 Sasol); $C_{10}$ alcohol EO4 (Novel 10-4 Sasol); and 2-ethyl-hexanol PO5EO6 (Ecosurf EH6-Dow).

Other particularly preferred surfactants for use here in include linear amine oxide surfactants, in particular $C_8$-$C_{12}$ dimethyl amine oxide, more in particular $C_{10}$ dimethyl amine oxide; alkyldimethylbetaine surfactants, more in particular N,N-Dimethyl-N-dodecylglycine betaine (Empigen BB-Huntsman); alkyl glucamide surfactants such as N-alkyl-N-acylglucamide preferably N-decanoyl-N-methylglucamine, and the alkyl glucamide surfactants sold under the name of GlucoPure®, GlucoTain®, and GlucoWet® by Clariant; alkylpolyglucoside surfactants, more in particular $C_8$ to $C_{12}$ alkyl polyglucosides, more preferably $C_8$ to $C_{10}$ alkyl polyglucosides such as for example Triton CG50 (Dow)

These surfactants improve the antimicrobial activity of the modified amino acid.

Non-aqueous solvent

The antimicrobial system of the composition of the present invention comprises a non-aqueous solvent, the solvent comprises carbon, hydrogen and oxygen atoms. Preferred solvents for use herein include glycol ethers, diols and mixtures thereof. Suitable diols to use herein include 1,2-hexane diol, 1,2-octanediol and 1,4 butanediol. Especially preferred for use herein is 1, 4-butanediol. The composition of the invention preferably comprises a glycol ether of

Formula 1:

Formula 1 = R1O(R2O)nR3

wherein

R1 is a linear or branched C4, C5 or C6 alkyl, a substituted or unsubstituted phenyl, preferably n-butyl. Benzyl is one of the substituted phenyls for use herein.
R2 is ethyl or isopropyl, preferably isopropyl
R3 is hydrogen or methyl, preferably hydrogen
n is 1, 2 or 3, preferably 1 or 2

Suitable glycol ethers according to Formula 1 include ethyleneglycol n-butyl ether, diethyleneglycol n-butyl ether, triethyleneglycol n-butyl ether, propyleneglycol n-butyl ether, dipropyleneglycol n-butyl ether, tripropyleneglycol n-butyl ether, ethyleneglycol n-pentyl ether, diethyleneglycol n-pentyl ether, triethyleneglycol n-pentyl ether, propyleneglycol n-pentyl ether, dipropyleneglycol n-pentyl ether, tripropyleneglycol n-pentyl ether, ethyleneglycol n-hexyl ether, diethyleneglycol n-hexyl ether, triethyleneglycol n-hexyl ether, propyleneglycol n-hexyl ether, dipropyleneglycol n-hexyl ether, tripropyleneglycol n-hexyl ether, ethyleneglycol phenyl ether, diethyleneglycol phenyl ether, triethyleneglycol phenyl ether, propyleneglycol phenyl ether, dipropyleneglycol phenyl ether, tripropyleneglycol phenyl ether, ethyleneglycol benzyl ether, diethyleneglycol benzyl ether, triethyleneglycol benzyl ether, propyleneglycol benzyl ether, dipropyleneglycol benzyl ether, tripropyleneglycol benzyl ether, ethyleneglycol isobutyl ether, diethyleneglycol isobutyl ether, triethyleneglycol isobutyl ether, propyleneglycol isobutyl ether, dipropyleneglycol isobutyl ether, tripropyleneglycol isobutyl ether, ethyleneglycol isopentyl ether, diethyleneglycol isopentyl ether, triethyleneglycol isopentyl ether, propyleneglycol isopentyl ether, dipropyleneglycol isopentyl ether, tripropyleneglycol isopentyl ether, ethyleneglycol isohexyl ether, diethyleneglycol isohexyl ether, triethyleneglycol isohexyl ether, propyleneglycol isohexyl ether, dipropyleneglycol isohexyl ether, tripropyleneglycol isohexyl ether, ethyleneglycol n-butyl methyl ether, diethyleneglycol n-butyl methyl ether triethyleneglycol n-butyl methyl ether, propyleneglycol n-butyl methyl ether, dipropyleneglycol n-butyl methyl ether, tripropyleneglycol n-butyl methyl ether, ethyleneglycol n-pentyl methyl ether, diethyleneglycol n-pentyl methyl ether, triethyleneglycol n-pentyl methyl ether, propyleneglycol n-pentyl methyl ether, dipropyleneglycol n-pentyl methyl ether, tripropyleneglycol n-pentyl methyl ether, ethyleneglycol n-hexyl methyl ether, diethyleneglycol n-hexyl methyl ether, triethyleneglycol n-hexyl methyl ether, propyleneglycol n-hexyl methyl ether, dipropyleneglycol n-hexyl methyl ether, tripropyleneglycol n-hexyl methyl ether, ethyleneglycol phenyl methyl ether, diethyleneglycol phenyl methyl ether, triethyleneglycol phenyl methyl ether, propyleneglycol phenyl methyl ether, dipropyleneglycol phenyl methyl ether, tripropyleneglycol phenyl methyl ether, ethyleneglycol benzyl methyl ether, diethyleneglycol benzyl methyl ether, triethyleneglycol benzyl methyl ether, propyleneglycol benzyl methyl ether, dipropyleneglycol benzyl methyl ether, tripropyleneglycol benzyl methyl ether, ethyleneglycol isobutyl methyl ether, diethyleneglycol isobutyl methyl ether, triethyleneglycol isobutyl methyl ether, propyleneglycol isobutyl methyl ether, dipropyleneglycol isobutyl methyl ether, tripropyleneglycol isobutyl methyl ether, ethyleneglycol isopentyl methyl ether, diethyleneglycol isopentyl methyl ether, triethyleneglycol isopentyl methyl ether, propyleneglycol isopentyl methyl ether, dipropyleneglycol isopentyl methyl ether, tripropyleneglycol isopentyl methyl ether, ethyleneglycol isohexyl methyl ether, diethyleneglycol isohexyl methyl ether, triethyleneglycol isohexyl methyl ether, propyleneglycol isohexyl methyl ether, dipropyleneglycol isohexyl methyl ether, tripropyleneglycol isohexyl methyl ether, and mixtures thereof.

Preferred glycol ether solvents according to Formula 1 are ethyleneglycol n-butyl ether, diethyleneglycol n-butyl ether, triethyleneglycol n-butyl ether, propyleneglycol n-butyl ether, dipropyleneglycol n-butyl ether, tripropyleneglycol n-butyl ether, and mixtures thereof.

The most preferred glycol ether for use herein are selected from is the group consisting of of diethylene glycol butyl ether, di(propylene glycol) methyl ether and mixtures thereof.

The composition of the invention preferably comprises from about 0.1% to about 10%, more preferably from about 0.2 to about 6% by weight of the composition of the glycol ether, more preferably from about 0.2 to about 3% by weight of the composition of diethylene glycol butyl ether, di(propylene glycol) methyl ether and mixtures thereof.

<u>Antimicrobial agent</u>

The antimicrobial system of the composition of the invention comprises an antimicrobial agent. The antimicrobial agent comprises a modified amino acid. The amino acid is selected from the group consisting of alanine, phenylalanine and valine. The modified amino acid comprises an organic group attached to the carboxyl group of the amino acid, thereby forming an ester group. The organic group may be selected to increase the overall hydrophobicity of the resulting compound, which is believed to improve the antimicrobial efficacy.

The antimicrobial system of the composition of the invention comprises an antimicrobial agent comprising a compound according to Formula I,

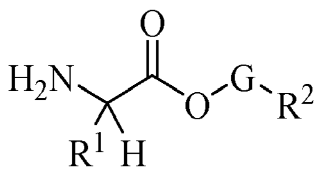

Formula I

wherein R1 is the side group of a proteogenic amino acid, the amino acid is selected from the group consisting of alanine ($-CH_3$), phenylalanine ($-CH_2C_6H_5$) and valine ($-CH(CH_3)_2$).

The at least one side group comprises a member having a structure selected from the following group, where " # " represents where the side group is attached to the alpha carbon atom attached to the nitrogen atom and carbonyl group of the amino acid:

| R1 Structure | Condensed Formula | Description of Structure |
|---|---|---|
| 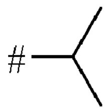 | #-$CH(CH_3)_2$ | Side group of valine |
| 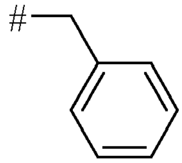 | #-$CH_2C_6H_5$ | Side group of phenylalanine |
| 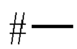 | #-$CH_3$ | Side group of alanine |

$R^1$ is selected from $-CH_3$, $-CH(CH_3)_2$ and $-CH_2C_6H_5$;
$R^2$ is a monovalent hydrocarbon moiety optionally containing one or more O atoms present as -O-, -OH, and mixtures thereof; and

when $R^1$ is $-CH_3$ or $-CH(CH_3)_2$ $R^2$ comprises from 4 to 14 carbon atoms, preferably from 6 to 12 carbon atoms; and when $R^1$ is $-CH_2C_6H_5$ $R^2$ comprises from 4 to 10 carbon atoms; and wherein in G is $(C_2H_3R^3O)_m$

where each $R^3$ is independently selected from H or $CH_3$,
wherein m is from 0 to 3,

When $R^1$ is selected from $-CH_3$ (the side group of alanine) or $-CH(CH_3)_2$ (the side group of valine), $R^2$ comprises from 4 to 14 carbon atoms, preferably from 4 to 12, more preferably from 6 to 10 carbon atoms. Preferably $R^2$ is a linear carbon chain comprising from 4 to 14 carbon atoms, preferably from 4 to 12, more preferably from 6 to 10 carbon atoms. Without wishing to being bound by theory, it is believed that modified amino acids having an $R^2$ carbon chain of from 4 to 12, preferably from 6 to 10 carbon atoms seems to be provide the modified amino acid the optimum shape to disrupt the biolipid membrane of microorganisms. "m" can be 0 or "m" can be from 1 to 3, Q can be an ethoxy group, a propoxy group or a mixture thereof. It has been found that compounds in which "m" is from 1 to 3 provide good solubility.

When $R^1$ is $-CH_2C_6H_5$ (the side group of phenylalanine), $R^2$ comprises from 4 to 10 carbon atoms, preferably in the case in which the side group is that of phenylalanine, $R^2$ a benzyl substituted or unsubstituted group or a linear carbon chain comprising from 6 to 10 carbon atoms, preferably 8 carbon atoms. It has been found that phenylalanine modified by adding a benzyl group or a linear carbon chain provides very good antimicrobial efficacy. "m" can be 0 or "m" can be from 1 to 3, Q can be an ethoxy group, a propoxy group or a mixture thereof. It has been found that compounds in which "m" is from 1 to 3 provide good solubility.

Preferred compounds according to Formula I include valine C8 ester, phenylalanine benzyl ester and phenylalanine C8 ester.

Preferably the modified amino acids of the invention have a logP of from 1.5 to 6.0, preferably from 2.0 to 5.0 as calculated using the Consensus logP Computational Model, version 14.5 (Linux).

Alternatively, the composition of the invention comprises antimicrobial agent comprising a compound according to Formula I,

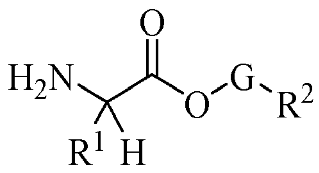

Formula I

wherein $R^1$ is selected from $-CH_3$, $-CH(CH_3)_2$ and $-CH_2C_6H_5$;
wherein $R^2$ is a monovalent hydrocarbon moiety optionally containing one or more O atoms present as -O-, -OH, and mixtures thereof; and
wherein G is $(C_2H_3R^3O)_m$
where each $R^3$ is independently selected from H or $CH_3$,
wherein $m$ is an integer from 0 to 3,
wherein the compound of Formula I has a logP of from about 1.5 to about 6.0, preferably from about 2.0 to about 5.0 as calculated using the Consensus logP Computational Model, version 14.5 (Linux). Compositions comprising compounds of Formula I with a logP of from about 1.5 to about 6.0, preferably from about 2.0 to about 5.0 provide good antimicrobial benefits.

## Optional ingredients

### *Chelating agent*

The antimicrobial composition can comprise a chelating agent. Suitable chelating agents, in combination with the surfactant system, improve the shine benefit. Chelating agent can be incorporated into the compositions in amounts ranging from 0.02% to 5.0%, preferably from 0.1% to 3.0%, more preferably from 0.2% to 2.0% and most preferably from 0.2% to 0.4% by weight of the composition.

Suitable phosphonate chelating agents include ethylene diamine tetra methylene phosphonates, and diethylene triamine penta methylene phosphonates (DTPMP), and can be present either in their acid form or as salts.

A preferred biodegradable chelating agent for use herein is ethylene diamine N,N'-disuccinic acid, or alkali metal, or alkaline earth, ammonium or substitutes ammonium salts thereof or mixtures thereof. A more preferred biodegradable chelating agent is L-glutamic acid N,N-diacetic acid (GLDA) commercially available under tradename Dissolvine 47S from Akzo Nobel.

Suitable amino carboxylates include ethylene diamine tetra acetates, diethylene triamine pentaacetates, diethylene triamine pentaacetate (DTPA), N- hydroxyethylethylenediamine triacetates, nitrilotriacetates, ethylenediamine tetrapropionates, triethylenetetraaminehexa-acetates, ethanoldiglycines, and methyl glycine diacetic acid (MGDA), both in their acid form, or in their alkali metal, ammonium, and substituted ammonium salt forms. Particularly suitable amino carboxylate to be used herein is propylene diamine tetracetic acid (PDTA) which is, for instance, commercially available from BASF under the trade name Trilon FS® and methyl glycine di-acetic acid (MGDA). Most preferred aminocarboxylate used herein is diethylene triamine pentaacetate (DTPA) from BASF. Further carboxylate chelating agents for use herein include salicylic acid, aspartic acid, glutamic acid, glycine, malonic acid or mixtures thereof.

Suitable polycarboxylates include itaconic acid and sodium polyitaconate which is, for instance, commercially available from Itaconix under the trade name of Itaconix® DSP 2K™, and Itaconix® CHT121™.

### *Polymers*

The antimicrobial composition may comprise an additional polymer. It has been found that the presence of a specific polymer as described herein, when present, allows further improving the grease removal performance of the composition due to the specific sudsing/foaming characteristics they provide to the composition. Suitable polymers for use herein are disclosed in EP2272942 and EP2025743.

The polymer can be selected from the group consisting of: a vinylpyrrolidone homopolymer (PVP); a polyethyleneglycol dimethylether (DM-PEG); a vinylpyrrolidone/dialkylaminoalkyl acrylate or methacrylate copolymers; a polystyrenesulphonate polymer (PSS); a poly vinyl pyridine-N-oxide (PVNO); a polyvinylpyrrolidone/ vinylimidazole copolymer (PVP-VI); a polyvinylpyrrolidone/ polyacrylic acid copolymer (PVP-AA); a polyvinylpyrrolidone/ vinylacetate copolymer (PVP-VA); a polyacrylic polymer or polyacrylicmaleic copolymer; and a polyacrylic or polyacrylic maleic phosphono end group copolymer; and mixtures thereof.

Typically, the antimicrobial hard surface cleaning composition may comprise from 0.005% to 5.0%, preferably from 0.10% to 4.0%, more preferably from 0.1% to 3.0% and most preferably from 0.20% to 1.0% by weight of the composition of said polymer.

*Thickener*

The antimicrobial composition of the invention can further comprise a thickener. Suitable thickeners herein include polyacrylate based polymers, preferably hydrophobically modified polyacrylate polymers; amide polymers; hydroxyl ethyl cellulose, preferably hydrophobically modified hydroxyl ethyl cellulose, xanthan gum, hydrogenated castor oil (HCO) and mixtures thereof.

*Other optional ingredients*

The composition of the invention may comprise a variety of other optional ingredients depending on the technical benefit aimed for and the surface treated. Suitable optional ingredients for use herein include perfume, builders, other polymers, buffers, hydrotropes, colorants, stabilisers, radical scavengers, abrasives, soil suspenders, brighteners, anti-dusting agents, dispersants, dye transfer inhibitors, pigments, silicones and/or dyes.

A preferred composition according to the invention comprises

a) from 0.01% to 5% by weight of the composition of a non-ionic surfactant selected from the group consisting of alkyl polyglucoside, alkoxylated alcohol and mixtures thereof;
b) from 0. 01% to 10% by weight of the composition of a solvent is selected from the group consisting of diethylene glycol butyl ether, di(propylene glycol) methyl ether and mixtures thereof.;
c) from 0.001 to 1% by weight of the composition of an antimicrobial agent selected from the group consisting of compounds of Formula I wherein the compound of Formula I has a logP of from about 1.5 to about 6.0, preferably from about 2.0 to about 5.0 as calculated using the Consensus logP Computational Model, version 14.5 (Linux);
d) at least 50% by weight of the composition of water; and

wherein the composition has a pH less than or equal to 7, preferably from pH 2 to 7 as measured at 25°C.

A preferred composition according to the invention comprises

a) from 0.01% to 5% by weight of the composition of a non-ionic surfactant comprising a fatty alcohol preferably an alkoxylated alcohol comprising from 6 to 16 carbon atoms and from 2 to 12 alkoxy groups, preferably from 4 to 10 ethoxy groups;
b) from 0. 01% to 10% by weight of the composition of a solvent is selected from the group consisting of glycol ethers, diols and mixtures thereof;
c) from 0.001 to 1% by weight of the composition of an antimicrobial agent selected from the group consisting of compounds of Formula I wherein:

i) $R^1$ is $-CH(CH_3)_2$ and $R^2$ is a carbon chain comprising 8 carbon atoms;
ii) R1 is $-CH_2C_6H_5$ and $R^2$ is selected from a substituted or unsubstituted benzyl group and a hydrocarbon linear chain comprising 8 carbon atoms;

d) from 85% to 98% by weight of the composition of water; and

wherein the composition has a pH less than or equal to 7, preferably a pH from 2 to 7 as measured at 25°C.

A preferred composition according to the invention comprises

a) from 0.01% to 5% by weight of the composition of a non-ionic surfactant selected from the group consisting of alkyl polyglucoside, alkoxylated alcohols and mixtures thereof;
b) from 0. 01% to 10% by weight of the composition of a solvent is selected from the group consisting of diethylene glycol butyl ether, di(propylene glycol) methyl ether and mixtures thereof.;
c) from 0.001 to 1% by weight of the composition of an antimicrobial agent selected from the group consisting of

compounds of Formula I wherein:

i) R1 is $-CH(CH_3)_2$ and $R^2$ is a carbon chain comprising 8 carbon atoms;
ii) R1 is $-CH_2C_6H_5$ and $R^2$ is selected from a substituted or unsubstituted benzyl group and a hydrocarbon linear chain comprising 8 carbon atoms;

d) from 85% to 98% by weight of the composition of water; and wherein the composition has a pH less than or equal to 7, preferably a pH from 2 to 7 as measured at 25°C.

Wipe

The present invention also relates to an article treated with the composition of the invention. The article is preferably a wipe. Suitable wipes can be fibrous. Suitable fibrous wipes can comprise polymeric fibres, cellulose fibres, and combinations thereof. Suitable cellulose-based wipes include kitchen wipes, and the like. Suitable polymeric fibres include polyethylene, polyester, and the like. Polymeric fibres can be spun-bonded to form the wipe. Methods for preparing thermally bonded fibrous materials are described in U.S. application Ser. No. 08/479,096 (see especially pages 16-20) and U.S. Pat. No. 5,549,589 (see especially Columns 9 to 10). Suitable pads include foams and the like, such as HIPE-derived hydrophilic, polymeric foam. Such foams and methods for their preparation are described in U.S. Pat. No. 5,550,167; and U.S. patent application Ser. No. 08/370,695.

The load factor is defined as the weight ratio of antimicrobial solution to nonwoven substrate is preferably from about 3X to about 10X. Preferably, the load factor is between 4X and 8X, or from 4.5X to 7.5X, or from 5X to 7X. It is found that higher load factors for the premoistened wipes of the invention are preferable since they help increase product mileage.

Method of cleaning a surface

The cleaning composition of the invention is particularly suited for cleaning surfaces selected from the group consisting of: ceramic, enamel, stainless steel, Inox®, Formica®, vinyl, no-wax vinyl, linoleum, melamine, glass, plastics and plastified wood, and combinations thereof. In particular, the compositions are particularly suited for reducing the microbial population, while leaving surfaces clean, shiny and grease free.

The compositions described herein can be used neat or can be achieved by diluting with water a concentrated composition prior to applying to the surface. In preferred methods, the hard surface cleaning composition is applied neat, more preferably, the hard surface cleaning composition is sprayed onto the hard surface.

The composition can be applied by any suitable means, including using a mop, sponge, cloth, paper towel, or other suitable implement.

The hard surface may be rinsed, preferably with clean water, in an optional further step, and also as a further step, wiped, such as with a cloth or a paper towel.

In another preferred embodiment of the present invention said method of cleaning a hard surface includes the steps of applying, preferably spraying, said liquid composition onto said hard surface, leaving said liquid composition to act onto said surface for a period of time with or without applying mechanical action, and optionally removing said liquid composition, preferably removing said liquid composition by rinsing said hard surface with water and/or wiping said hard surface with an appropriate implement, e.g., a sponge, a paper or cloth towel and the like. Such compositions are often referred to as "ready-to-use" compositions. In preferred methods, the hard surface is not rinsed after application of the antimicrobial hard surface cleaning composition.

It is believed that antimicrobial compositions comprising specific surfactants, non-aqueous solvents and the modified amino acide of Formula I deliver very good antimicrobial efficacy at very low levels of antimicrobial agent. The antimicrobial hard surface cleaning composition of the present invention exhibits improved antimicrobial efficacy, good grease cleaning and/or streak-free shine.

TEST METHODS

pH measurement

The pH is measured on the neat composition, at 25°C, using a pH meter with compatible gel-filled pH probe (such as Sartarius PT-10P meter with Toledo probe part number 52 000 100), calibrated according to the instruction manual.

Test Method for Determining logP

The value of the log of the Octanol/Water Partition Coefficient (logP) is computed for a modified amino acid material as described here.

The logP of an individual material is calculated using the Consensus logP Computational Model, version 14.5 (Linux) available from Advanced Chemistry Development Inc. (ACD/Labs) (Toronto, Canada) to provide the unitless logP value. The ACD/Labs' Consensus logP Computational Model is part of the ACD/Labs model suite.

For illustrative purposes, the chart shown immediately below contains 27 examples of molecules that conform to Formula I and the logP for each molecule. For each molecule, the number of carbon atoms in $R^2$ and the value of the index *m* applied to $(C_2H_3R^3O)_m$ is given, as well as the value for logP. The table illustrates how the supplied value is rounded to provide logP. The rounded value is the value of logP used herein.

| | | | | ACD Consensus logP | |
|---|---|---|---|---|---|
| No. | Structure | $R^2$ C # | m | Supplied | Rounded |
| 1 | 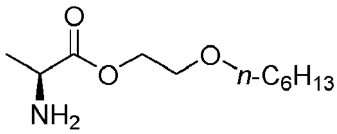 | 6 | 1 | 2.099 | 2.0 |
| 2 | 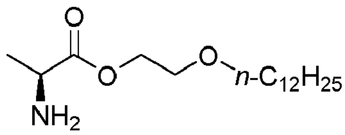 | 12 | 1 | 5.156 | 5.2 |
| 3 | 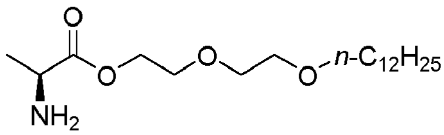 | 12 | 2 | 4.921 | 4.9 |
| 4 | 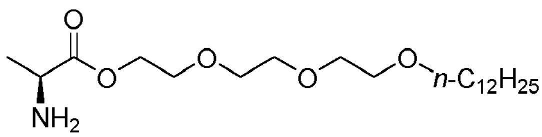 | 12 | 3 | 4.686 | 4.7 |
| 5 | 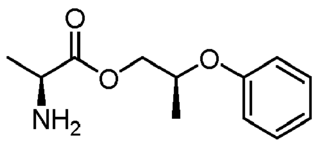 | 6 | 1 | 1.530 | 1.5 |
| 6 | 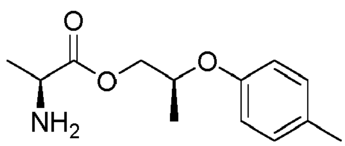 | 7 | 1 | 1.968 | 2.0 |
| 7 | 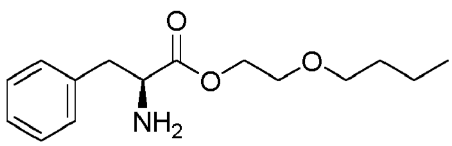 | 4 | 1 | 2.606 | 2.6 |
| 8 | 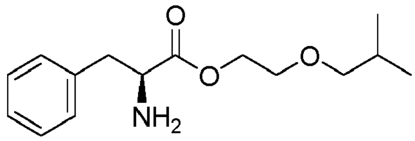 | 4 | 1 | 2.450 | 2.5 |

(continued)

| | | | | ACD Consensus logP | |
|---|---|---|---|---|---|
| No. | Structure | $R^2$ C # | m | Supplied | Rounded |
| 9 | 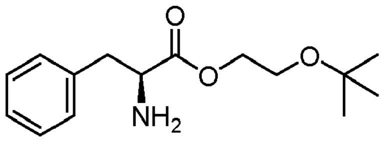 | 4 | 1 | 2.352 | 2.4 |
| 10 | 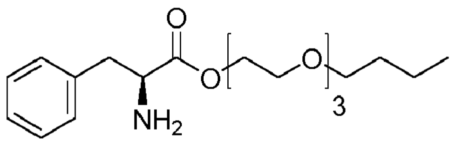 | 4 | 3 | 2.136 | 2.1 |
| 11 | 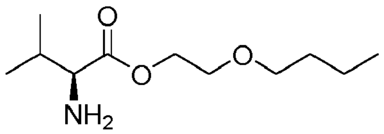 | 4 | 1 | 1.943 | 2.0 |
| 12 | 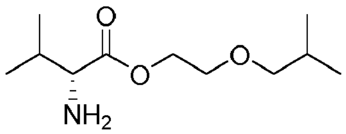 | 4 | 1 | 1.787 | 1.8 |
| 13 | 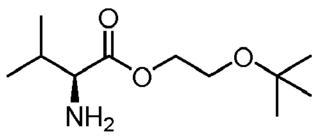 | 4 | 1 | 1.688 | 1.7 |
| 14 | 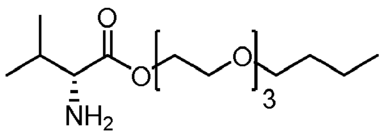 | 4 | 3 | 1.473 | 1.5 |
| 15 | 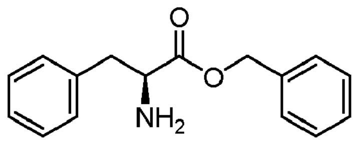 | 7 | 0 | 2.864 | 2.9 |
| 16 | 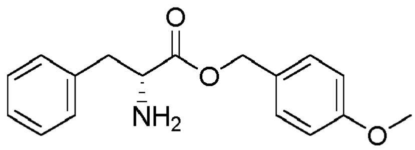 | 8 | 0 | 2.753 | 2.8 |
| 17 | 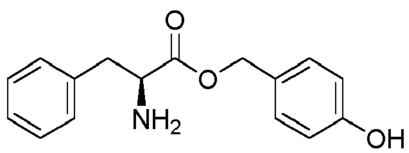 | 7 | 0 | 2.211 | 2.2 |
| 18 | 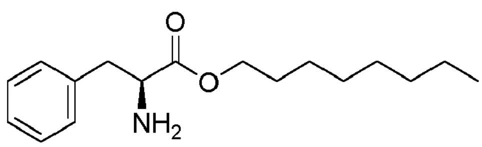 | 8 | 0 | 4.793 | 4.8 |

(continued)

| | | | | ACD Consensus logP | |
|---|---|---|---|---|---|
| No. | Structure | $R^2$ C # | m | Supplied | Rounded |
| 19 | 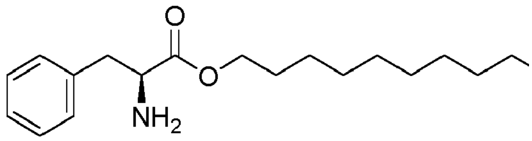 | 10 | 0 | 5.812 | 5.8 |
| 20 | 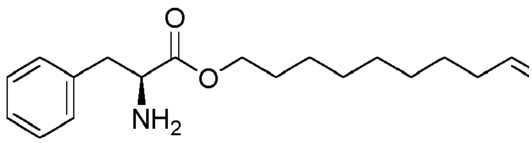 | 10 | 0 | 5.404 | 5.4 |
| 21 | 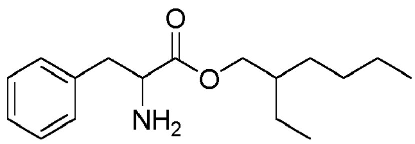 | 8 | 0 | 4.637 | 4.6 |
| 22 | 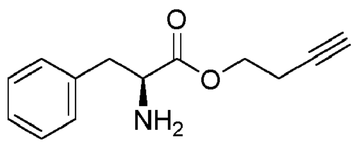 | 4 | 0 | 1.784 | 1.8 |
| 23 | 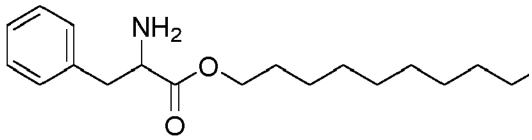 | 9 | 0 | 5.812 | 5.8 |
| 24 | 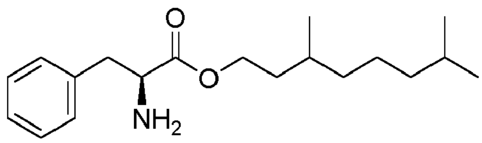 | 10 | 0 | 5.500 | 5.5 |
| 25 | 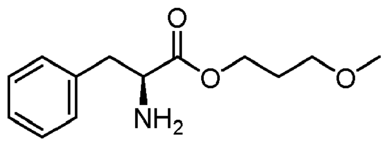 | 4 | 0 | 1.575 | 1.6 |
| 26 | 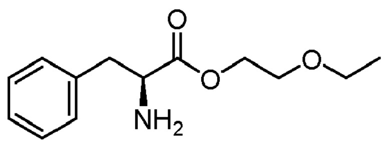 | 4 | 0 | 1.587 | 1.6 |
| 27 | 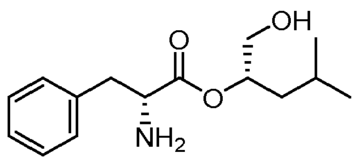 | 6 | 0 | 2.154 | 2.1 |

Surface Antimicrobial Kill Testing Method

Inoculum is prepared by streaking microorganism onto a Tryptic Soy Agar (TSA) plate and incubating for 24 h

at 33°C. Plated bacteria is resuspended in saline until the transmittance percentage falls within the accepted range for ~$10^8$ cfu/mL. For K. pneumonia (Kp) and *P. aeruginosa* (Pa), this is 31.00-33.00 %T. For *S. aureus* (Sa) this is 23.00-25.00 %T. A 10x concentration is made by spinning down the prepared inoculum, removing the supernatant saline from the bacterial pellet, then resuspending the pellet in 1/10th of the original volume of saline. The final inoculum is prepared with 5% of "soil" in the form of Fetal Bovine Serum (FBS).

A 18x18 mm sterile glass coverslip is placed into an appropriate container (e.g. petri dish). 20 $\mu$L of prepared inoculum is added to the glass coverslip. Inoculum is then air-dried for 30 minutes in a 36°C incubator. After drying, 40 $\mu$L of test sample is added on top of the dried inoculum. This is incubated at room temperature for the desired contact time. 5 mL of neutralizing media (Modified Letheen Broth + Tween + Lecithin (MLBTL)) is added to the coverslip and shaken on an orbital shaker for 5 minutes to ensure proper neutralization and extraction. Viability is then assessed of the neutralized and extracted sample by traditional/alternative microbiological techniques.

Normalization of Antimicrobial Activity Method

The normalized antimicrobial activity reported in the performance examples below was generated from detection time data obtained as described in the Surface Antimicrobial Kill Test Method. To account for day-to-day variability an internal standard was tested with each series. The internal standard was a composition of 0.25 wt% Triclosan, Sigma Aldrich (St. Louis, MO, USA; CAS # 3380-34-5, 97.0-103.0% (active substance, GC)), 50 wt% DMSO, and 49.75 wt% $H_2O$, with a final solution pH of 7.7. Normalized activity is reported following the equation 1 below.

$$\text{Normalized Activity}=(\alpha\Delta DT-\beta\Delta DT)/(\gamma\Delta DT-\beta\Delta DT) \qquad \text{equation 1.}$$

where, $\alpha\Delta DT$ is the average detection time of the antimicrobial compound, and $\gamma\Delta DT$ is the average detection time of the reference triclosan internal standard, and $\beta\Delta DT$ is the average detection time of the background unperturbed bacteria.

Formulation Method for Surface Kill Testing

Modified amino acids of the present disclosure were tested as aqueous solutions in the Surface Antimicrobial Kill Testing Method above. To prepare test solutions modified amino acids were first dissolved in the appropriate solvent. Second the selected surfactant is added to the mixture. After vortex (1 min, Vortex-2 Genie, vortex speed 8) mixing, the samples were then diluted with ½ portion of reverse osmosis water (RO water, Millipore Direct-Q™, pH 6). The aqueous solution was then vortexed (1 min, Vortex-2 Genie, vortex speed 8), to which the second ½ portion of water is added. The pH of the solution was then adjusted to the target pH using either IN HCl, Glacial Acetic Acid, or IN NaOH. The final solution was then vortexed (1 min, Vortex-2 Genie, vortex speed 8). An example batch sheet is provided below in Table 1.

Surfactant description and vender: Tween® 80 (Sigma Aldrich, St. Louis, MO, USA), Plantaren® 2000 N UP (BASF, Florham Park, NJ, USA), EcoSurf™ EH6 (Sigma Aldrich, St. Louis, MO, USA), EcoSurf™ EH9 (Sigma Aldrich, St. Louis, MO, USA), Surfonic® L24-9 (Huntsman Holland BV, Botlek-Rotterdam, Netherlands), Miranol® Ultra L-32 (Solvay S.A., Brussels, Belgium), Cetyltrimethylammonium chloride (CTAC, 25 wt% in H2O, Sigma Aldrich, St. Louis, MO, USA), Sodium Lauryl Sulfate (SLS, 29 wt% in H2O, Stepan, Northfield, IL, USA), Tergitol™ TMN-6 (Sigma Aldrich, St. Louis, MO, USA), $C_{10}$ dimethyl amine oxide is commercially available under the trade name Genaminox® K-10 from Clariant.

Solvents and vender: 1,4-Butanediol (99%, Sigma Aldrich, St. Louis, MO, USA), Ethylene Glycol (99%, Sigma Aldrich, St. Louis, MO, USA), Diethylene glycol mono-n-butyl ether (99%, DEGBE, Thermo Fisher Scientific, Ward Hill, MA, USA), Di(propylene glycol)methyl ether, mixture of isomers (99%, DPGME, Sigma Aldrich, St. Louis, MO, USA), Dimethyl sulfoxide (99%, DMSO, igma Aldrich, St. Louis, MO, USA), 1,2-Hexanediol (98%, Sigma Aldrich, St. Louis, MO, USA), Hexylene Glycol (99%, Sigma Aldrich, St. Louis, MO, USA), 2-Phenoxyethanol (99%, Sigma Aldrich, St. Louis, MO, USA), Di(ethylene glycol) hexyl ether (95%, Sigma Aldrich, St. Louis, MO, USA).

Table 1: Illustrative formulation sheet for modified amino acids solutions for surface antimicrobial kill testing.

| Ingredients | Quantity (g) |
|---|---|
| Amino Acid Active (g) | 0.1 g |
| EcoSurf EH-9 (g) | 0.2 g |
| DEGBE (g) | 1.0 g |
| Reverse Osmosis Water (g) | 18.7 g |
| Total Batch Size | 20.00 |

Table 2: Illustrative formulation sheet for modified amino acids solutions for surface antimicrobial kill testing.

| Ingredients | Quantity (g) |
|---|---|
| Amino Acid Active (g) | 0.1 g |
| EcoSurf EH-9 (g) | 0.2 g |
| 1,2-Hexanediol (g) | 1.0 g |
| Reverse Osmosis Water (g) | 18.7 g |
| Total Batch Size | 20.00 |

Table 3: Illustrative formulation sheet for modified amino acids solutions for surface antimicrobial kill testing.

| Ingredients | Quantity (g) |
|---|---|
| Amino Acid Active (g) | 0.1 g |
| EcoSurf EH-9 (g) | 0.2 g |
| Hexylene Glycol (g) | 1.0 g |
| Reverse Osmosis Water (g) | 18.7 g |
| Total Batch Size | 20.00 |

Table 4: Illustrative formulation sheet for modified amino acids solutions for surface antimicrobial kill testing.

| Ingredients | Quantity (g) |
|---|---|
| Amino Acid Active (g) | 0.1 g |
| Surfonic L 24-9 (g) | 0.2 g |
| Ethylene Glycol | 1.0 g |
| Reverse Osmosis Water (g) | 18.7 g |
| Total Batch Size | 20.00 |

Table 5: Illustrative formulation sheet for modified amino acids solutions for surface antimicrobial kill testing.

| Ingredients | Quantity (g) |
|---|---|
| Amino Acid Active (g) | 0.1 g |
| Tergitol TMN-6 (g) | 0.2 g |
| Di(ethylene glycol) hexyl ether (g) | 1.0 g |
| Reverse Osmosis Water (g) | 18.7 g |
| Total Batch Size | 20.00 |

Table 6: Illustrative formulation sheet for modified amino acids solutions for surface antimicrobial kill testing.

| Ingredients | Quantity (g) |
|---|---|
| Amino Acid Active (g) | 0.1 g |
| EcoSurf EH-6 (g) | 0.2 g |
| 2-Phenoxyethanol (g) | 1.0 g |
| Reverse Osmosis Water (g) | 18.7 g |
| Total Batch Size | 20.00 |

Table 7: Illustrative formulation sheet for modified amino acids solutions for surface antimicrobial kill testing.

| Ingredients | Quantity (g) |
|---|---|
| Amino Acid Active (g) | 0.1 g |

(continued)

| Ingredients | Quantity (g) |
|---|---|
| Surfonic L 24-9 (g) | 0.2 g |
| 2-Phenoxyethanol (g) | 0.2 g |
| DPGME | 0.8 g |
| Reverse Osmosis Water (g) | 18.7 g |
| Total Batch Size | 20.00 |

Table 8: Illustrative formulation sheet for modified amino acids solutions for surface antimicrobial kill testing.

| Ingredients | Quantity (g) |
|---|---|
| Amino Acid Active (g) | 0.1 g |
| Genaminox® K-10 (g) | 0.1 g |
| DEGBE | 1.0 g |
| Reverse Osmosis Water (g) | 18.8 g |
| Total Batch Size | 20.00 |

Table 9: Illustrative formulation sheet for modified amino acids solutions for surface antimicrobial kill testing.

| Ingredients | Quantity (g) |
|---|---|
| Amino Acid Active (g) | 0.1 g |
| Didecyldimethylammonium chloride | 0.1 g |
| DEGBE | 1.0 g |
| Reverse Osmosis Water (g) | 18.8 g |
| Total Batch Size | 20.00 |

Table 10: Illustrative formulation sheet for modified amino acids solutions for surface antimicrobial kill testing.

| Ingredients | Quantity (g) |
|---|---|
| Amino Acid Active (g) | 0.1 g |
| Surfonic L 24-9 | 0.1 g |
| Tween 80 | 0.1 g |
| DEGBE | 1.0 g |
| Reverse Osmosis Water (g) | 18.7 g |
| Total Batch Size | 20.00 |

Table 11: Illustrative formulation sheet for modified amino acids solutions for surface antimicrobial kill testing.

| Ingredients | Quantity (g) |
|---|---|
| Amino Acid Active (g) | 0.05 g |
| EcoSurf EH-9 (g) | 0.1 g |
| DEGBE (g) | 0.5 g |
| Reverse Osmosis Water (g) | 19.35 g |
| Total Batch Size | 20.00 |

Synthesis & Comparative Examples

**Methods of Preparing Antimicrobial Compounds (e.g., Modified Amino Acids)**

In the following synthesis examples, the materials are generally obtained / available from Sigma-Aldrich (St. Louis, MO, USA), except as indicated below. The amino acids are generally provided at >98% or even >99% purity. The alcohols are generally provided at >97%, >98%, or even >99% purity.

**General Method A:** General Preparation of Modified Amino Acid Ester Compound

To prepare an antimicrobial compound from an amino acid and an alkyl alcohol, a round bottom flask is charged with 1 equiv. of a free base amino acid starting material. To the flask is added 1 equiv. of an alcohol followed by 1.2 equiv. of p-Toluenesulfonic acid monohydrate (PTSA) or Methanesulfonic acid (MsOH). The flask is then diluted with toluene and refluxed for 24 h using a dean-stark apparatus. Solvent is removed in vacuo and the resulting crude material dissolved in chloroform. The solution is neutralized with $Et_3N$, then washed 3 times with $NaHCO_3$, and dried over $MgSO_4$. Solvent is removed and the washed material is diluted with cyclohexane, stored at 0 °C for 12h. The eluent is collected yielding the desired modified amino acid ester.

**Synthetic Example 1**

Synthetic Example **1** was prepared as described in General Method A, but using 10.0 g ofL-Alanine, 21.0 g of 1-Dodecanol, and 25.6 g of PTSA·$H_2O$. The independent solid **1** appears stable for several months by $^1$H NMR.

**Synthetic Example 2**

Synthetic Example **2** was prepared as described in General Method A, but using 10.0 g of L-Valine, 6.35 g of 1-Butanol, and 19.5 g of PTSA·$H_2O$. The independent fluid **2** appears stable for several months by $^1$H NMR.

**Synthetic Example 3**

Synthetic Example **3** was prepared as described in General Method A, but using 10.0 g of L-Valine, 8.72 g of 1-Hexanol, and 19.5 g of PTSA·$H_2O$. The independent fluid **3** appears stable for several months by $^1$H NMR.

**Synthetic Example 4**

Synthetic Example **4** was prepared as described in General Method A, but using 10.0 g of L-Valine, 11.1 g of 1-Octanol, and 19.5 g of PTSA·$H_2O$. The independent fluid **4** appears stable for several months by $^1$H NMR.

**Synthetic Example 5**

Synthetic Example **5** was prepared as described in General Method A, but using 10.0 g ofL-Valine, 16.1 g of 1-Dodecanol, and 19.5 g of PTSA·$H_2O$. The independent fluid **5** appears stable for several months by $^1$H NMR.

**Synthetic Example 6**

Synthetic Example **6** was prepared as described in General Method A, but using 10.0 g ofL-Valine, 20.8 g of 1-Hexadecanol, and 19.5 g of PTSA·$H_2O$. The independent fluid **6** appears stable for several months by $^1$H NMR.

**Synthetic Example 7**

Synthetic Example **7** was prepared as described in General Method A, but using 10.0 g of L-Valine, 23.0 g of 1-Octadecanol, and 19.5 g of PTSA·$H_2O$. The independent solid **7** appears stable for several months by $^1$H NMR.

**Synthetic Example 8**

Synthetic Example **8** was prepared as described in General Method A, but using 10.0 g ofL-Phenylalanine, 6.6 g of Benzyl alcohol, and 13.8 g of PTSA·$H_2O$. The independent solid **8** appears stable for several months by $^1$H NMR.

**Synthetic Example 9**

Synthetic Example **9** was prepared as described in General Method A, but using 10.0 g of L-Phenylalanine, 7.9 g of 1-Octanol, and 13.8 g of PTSA·$H_2O$. The independent solid **9** appears stable for several months by $^1$H NMR.

**Synthetic Example 10**

Synthetic Example **10** was prepared as described in General Method A, but using 10.0 g ofL-Phenylalanine, 11.3 g of 1-Dodecanol, and 13.8 g of PTSA·$H_2O$. The independent solid **10** appears stable for several months by $^1$H NMR.

**Structures of the Synthetic Examples.**

Table 12 below illustrates the structures of the Synthetic Examples 1-10. Calculated logP values for the total molecule are provided and were obtained using the Test Method for Determining logP described above.

**Table** 12. Structural representation and logP values of the Synthesis Examples.

| No. | Modified Amino Acid | logP | No. | Modified Amino Acid | logP |
|---|---|---|---|---|---|
| **1** | 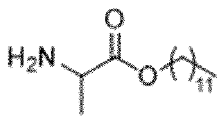 | 3.8 | **6** | 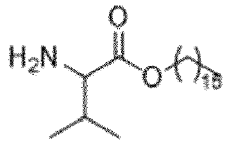 | 7.8 |
| **2** | 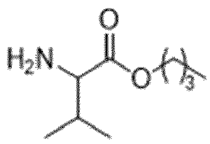 | 1.5 | 7 | 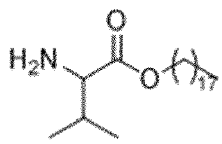 | 8.6 |
| **3** | 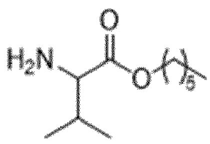 | 2.6 | **8** | 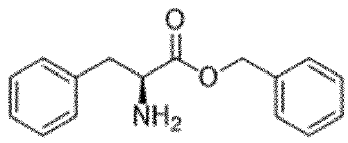 | 2.5 |
| **4** | 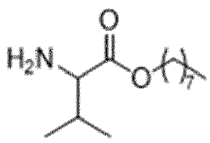 | 3.8 | **9** | 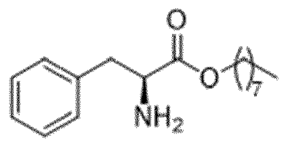 | 4.8 |
| **5** | 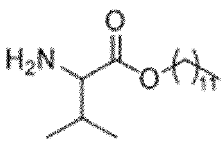 | 5.6 | **10** | 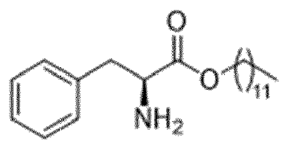 | 6.9 |

**Structures of the Comparative Examples.**

Table 13 below illustrates the structures of the Comparative Examples 1-2. Calculated logP values for the total molecule are provided and were obtained using the Test Method for Determining logP described above. The comparative samples were purchased and used as received from Sigma Aldrich (St. Louis, MO, USA).

**Table** 13. Structural representation and logP values of the Comparative Examples.

| No. | Modified Amino Acid | logP$^{\alpha}$ | No. | Modified Amino Acid | logP$^{\alpha}$ |
|---|---|---|---|---|---|
| C1 | 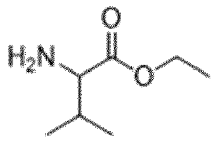 | 0.8 | C2 | 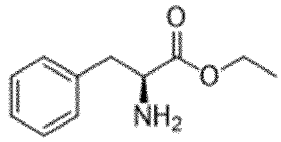 | 1.4 |

Performance Examples

In Performance Examples 1-4 below, formulations comprising solvent, surfactant, and antimicrobial agents according to the present disclosure (e.g., based on modified amino acid esters), are evaluated via microbial surface kill tests according to the Surface Antimicrobial Kill Testing Method provided above. After treatment, microbial growth is referenced and reported to a triclosan sample and unaltered microbes according to the Normalization of Antimicrobial Activity provided above. Therefore, values greater than one would be more active above the internal triclosan control, with values less than one but greater than zero still having antimicrobial activity. The data below shows the benefits afforded by hydrophobically modified amino acids.

**Performance Example 1.** Antimicrobial Activity of Formulations of Synthetic Example **1.**

Results of Antimicrobial Surface Testing are provided below in Table 14.

| | Antimicrobial Compound (0.5 wt%)$^{\alpha}$ | Solvent (5 wt%) | Surfactant (1 wt%) | Gram Negative Referenced Microbial Activity |
|---|---|---|---|---|
| 1 | - | DPGME | Tergitol TMN-6 | 0.3 |
| 2 | - | DPGME | Surfonic L 24-9 | 0.0 |
| 3 | Synthetic Example **1** | 1,4 Butanediol | Tergitol TMN-6 | 1.0 |
| 4 | Synthetic Example **1** | Ethylene glycol | Tergitol TMN-6 | 1.5 |
| 5 | Synthetic Example **1** | DPGME 1,4 Butanediol | Tergitol TMN-6 | 1.2 |
| 6 | Synthetic Example **1** | | Surfonic L 24-9 | 2.2 |
| 7 | Synthetic Example **1** | Ethylene glycol | Surfonic L 24-9 | 3.0 |
| 8 | Synthetic Example **1** | DPGME | Surfonic L 24-9 | 3.3 |

$^{\alpha}$Remaining wt% fraction composed of 0.1M Acetic acid buffer pH 4.5.

As shown in Table 14, a combination of a nonionic surfactant and non-aqueous solvent with Synthetic Example **1,** derived from alanine and a C12 hydrocarbon chain, proved to be antimicrobial. The highest antimicrobial activity observed with Synthetic Example **1** is given in row 8 in Table 1. DPGME was found to be the most preferred solvent. Furthermore, background controls show the effect of microbial activity stems from driving activity and solubility from Synthetic Example **1.** Surfonic L 24-9 was found to be more preferred then Terigtol TMN-6 as a surfactant.

**Performance Example 2.** Effect of logP on hard surface microbial activity in the presence of solvent and surfactant combinations.

Results of Antimicrobial Surface Testing are provided below in Table 15.

| | Antimicrobial Compound (0.5 wt%)α | logP (Carbon Length) | ChainSolvent | Surfactant (1 wt%) | Gram Negative Referenced Microbial Activity |
|---|---|---|---|---|---|
| 1 | - | | DEGBE (5wt%) | EcoSurf EH9 | 0.3 |
| 2 | Comparative Example C1 | 0.79 (C2) | DEGBE (5wt%) | EcoSurf EH9 | 0.5 |
| 3 | Synthetic Example **2** | 1.5 (C4) | DEGBE (5 wt%) | EcoSurf EH9 | 1.6 |
| 4 | Synthetic Example **3** | 2.6 (C6) | DEGBE (5wt%) | EcoSurf EH9 | 2.8 |
| 5 | Synthetic Example **4** | 3.8 (C8) | DEGBE (5wt%) | EcoSurf EH9 | 1.6 |
| 6 | Synthetic Example **4** | 3.8 (C8) | DEGBE (5 wt%) | EcoSurf EH6 | 3.7 |
| 7 | Synthetic Example **5** | 5.6 (C12) | DEGBE (5wt%) | EcoSurf EH9 | 2.8 |
| 8 | Synthetic Example **6** | 7.8 (C16) | DEGBE (5wt%) | EcoSurf EH9 | 0.6 |
| 9 | Synthetic Example **7** | 8.6 (C18) | DEGBE (5wt%) | EcoSurf EH9 | 0.9 |
| 10 | Synthetic Example **7** | 8.6 (C18) | DMSO (50 wt%) | EcoSurf EH6 | 0.6 |

αRemaining wt% fraction composed of 0.1M Acetic acid buffer pH 4.5.

As shown in Table 15, modified valine amino acids have a preferred logP from as low as about 1.5 to a cutoff point at about 7.8. This corresponds to preferred chain length between 4 and 12 carbon atoms. The highest activity sample for this experiment was found to be Synthetic Example **4,** with logP of 3.8 and 8 carbon atoms.

**Performance Example 3.** Structural preference of $R^2$ for Antimicrobial Activity (Table 16). Results of Antimicrobial Surface Testing are provided below in Table 16.

| | Antimicrobial Compound (0.5 wt%)α | Solvent | Surfactant (1 wt%) | Gram Negative Referenced Microbial Activity |
|---|---|---|---|---|
| 1 | - | DEGBE (5wt%) | EcoSurf EH9 | 0.3 |
| 2 | Comparative Example C2 | DEGBE (5wt%) | EcoSurf EH9 | 0.4 |
| 3 | Synthetic Example **8** | DEGBE (5 wt%) | EcoSurf EH9 | 4.6 |
| 4 | Synthetic Example **9** | DEGBE (5wt%) | EcoSurf EH9 | 6.0 |
| 5 | Synthetic Example **10** | DEGBE (5wt%) | EcoSurf EH9 | 0.1 |

αRemaining wt% fraction composed of 0.1M Acetic acid buffer pH 4.5.

As Table 16 illustrates both linear and aryl hyrophobes provide antimicrobial benefits. A strong preference is obtained for materials with logP values between 2 and 5. Most notably the phenylalanine ethyl ester, Comparative Example C2, provides little antimicrobial benefit. Similarly, in this nonionic formulation Synthetic Example **10,** with a logP value of 6.93, also provides little surface activity. Synthetic example **9,** possessing 1-octanol as the hydrophobe attached to phenylalanine, is the most active in this formulation.

**Performance Example 4.** Examination of surfactant and pH on surface antimicrobial efficacy of Synthetic Example **4.**

Results of Antimicrobial Surface Testing are provided below in Table 17.

| | Antimicrobial Compound (0.5 wt%)$^{\alpha}$ | Final pH of Formula | Surfactant (1 wt%) | Gram Negative Referenced Microbial Activity |
|---|---|---|---|---|
| 1 | - | 4.5 | Surfonic L24-9 | -0.1 |
| 2 | - | 4.5 | Ecosurf EH6 | 0.2 |
| 3 | - | 4.5 | SLS (29%) | 0.1 |
| 4 | - | 4.5 | Tween 80 | -0.1 |
| 5 | - | 4.5 | Plantaren 2000 | 0.7 |
| 6 | - | 4.5 | Miranol Ultra 32 | 0.2 |
| 7 | - | 4.5 | CTAC | 0.3 |
| 8 | Synthetic Example **4**$^{\beta}$ | 4.5 | - | 1.6 |
| 9 | Synthetic Example **4** | 2 | Surfonic L 24-9 | 2.5 |
| 10 | Synthetic Example **4** | 4.5 | Surfonic L 24-9 | 3.5 |
| 11 | Synthetic Example **4** | 4.5 | Ecosurf EH6 | 3.5 |
| 12 | Synthetic Example **4** | 4.5 | SLS (29%) | 0.4 |
| 13 | Synthetic Example **4** | 4.5 | Tween 80 | 3.5 |
| 14 | Synthetic Example **4** | 4.5 | Plantaren 2000 | 3.5 |
| 15 | Synthetic Example **4** | 4.5 | Miranol Ultra 32 | 3.5 |
| 16 | Synthetic Example **4** | 4.5 | CTAC | 3.5 |
| 17 | Synthetic Example **4** | 7 | Surfonic L24-9 | 3.5 |
| 18 | Synthetic Example **4** | 8.5 | Surfonic L24-9 | 0.2 |
| 19 | Synthetic Example **4** | 8.5 | Ecosurf EH6 | 0.7 |
| 20 | Synthetic Example **4** | 8.5 | SLS (29%) | 0.1 |

$^{\alpha}$Containing 5 wt% DPGME and remaining wt% fraction composed of water, where the final formulas is adjusted to the reported pH using either HCl or NaOH. $^{\beta}$Solution heated to 50C to ensure dissolution prior to testing.

As shown in Table 17, Synthetic Example **4** demonstrates improved antimicrobial efficacy from pH 2 to about pH 7. A pH range greater than 7 under the tested conditions did not provide a benefit. The most preferred pH range was found to be between a pH of about 4.5 to a pH about 7. Non-ionic surfactants, cationic surfactants, and amphoteric surfactants yielded isotropic solutions with modified amino acids and yielded improved microbial activity over the isolated modified amino acid (even at elevated temperature). While not wishing to be bound by theory we rationalize that anionic surfactant may reduce the activity of modified amino acids through ion paring (where the ion pairing is between the anion of the surfactant head group and the protonated amine portion of the modified amino acid), which could contribute to reduce microbial availability of amino acid actives.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other

reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. An antimicrobial hard surface treatment composition comprising an antimicrobial system, the antimicrobial system comprising:

   a. from about 0.01 to about 10% by weight of the composition of a surfactant selected from the group consisting of non-ionic, cationic, amphoteric and a mixture thereof;
   b. from about 0.01 to about 10% by weight of the composition of a non-aqueous solvent;
   c. an antimicrobial agent comprising a compound according to Formula I,

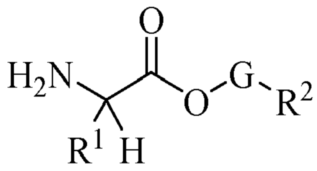

Formula I

   wherein $R^1$ is selected from $-CH_3$, $-CH(CH_3)_2$ and $-CH_2C_6H_5$;
   wherein $R^2$ is a monovalent hydrocarbon moiety optionally containing one or more O atoms present as -O-, -OH, and mixtures thereof; and

      when $R^1$ is $-CH_3$ or $-CH(CH_3)_2$, $R^2$ comprises from 4 to 14 carbon atoms; and
      when $R^1$ is $-CH_2C_6H_5$, $R^2$ comprises from 4 to 10 carbon atoms; and

   wherein G is $(C_2H_3R^3O)_m$
   where each $R^3$ is independently selected from H or $CH_3$,
   wherein m is from 0 to 3,
   at least 50% by weight of the composition of water

   wherein the composition has a pH less than or equal to 7 as measured at 25°C.

2. A composition according to claim 1 wherein the compound of Formula I has a logP of from about 1.5 to about 6.0, preferably from about 2.0 to about 5.0 as calculated using the Consensus logP Computational Model, version 14.5 (Linux).

3. A composition according to any of claims 1 or 2 wherein R1 is -CH3 or -CH(CH3)2 and R2 is selected from linear carbon chains comprising from 4 to 14 carbon atoms, preferably from 4 to 12 carbon atoms, more preferably from 6 to 10 carbon atoms.

4. A composition according to the preceding claim wherein R1 is -CH(CH3)2 and R2 is a carbon chain comprising 8 carbon atoms.

5. A composition according to any of claims 1 or 2 wherein R1 is -CH2C6H5 and R2 is selected from a substituted or unsubstituted benzyl group and a hydrocarbon linear chain comprising 8 carbon atoms.

6. An antimicrobial hard surface treatment composition comprising an antimicrobial system, the antimicrobial system comprising:

a. from about 0.01 to about 10% by weight of the composition of a surfactant selected from the group consisting of non-ionic, cationic, amphoteric and a mixture thereof;
b. from about 0.01 to about 10% by weight of the composition of a non-aqueous solvent;
c. an antimicrobial agent comprising a compound according to Formula I,

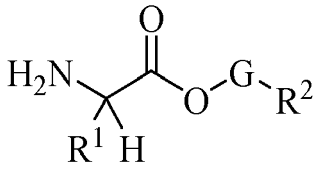

Formula I

wherein $R^1$ is selected from -CH3, -CH(CH3)2 and -CH2C6H5;
wherein $R^2$ is a monovalent hydrocarbon moiety optionally containing one or more O atoms present as -O-, -OH, and mixtures thereof; and
wherein G is $(C_2H_3R^3O)_m$
where each $R^3$ is independently selected from H or $CH_3$,
wherein $m$ is from 0 to 3,
wherein the compound of Formula I has a logP of from about 1.5 to about 6.0, preferably from about 2.0 to about 5.0 as calculated using the Consensus logP Computational Model, version 14.5 (Linux); and at least 50% by weight of the composition of water

wherein the composition has a pH less than or equal to 7 as measured at 25°C.

**7.** A composition according to any of the preceding claims wherein the surfactant is a non-ionic surfactant, preferably selected from the group consisting of alkyl polyglucoside, alkoxylated alcohol, alkyl betaine, alkyl glucamine, alkyl glucamide, alkyl amine oxide and mixtures thereof.

**8.** A composition according to the preceding claim wherein the non-ionic surfactant is selected from the group consisting of alkyl polyglucoside, alkoxylated alcohol and mixtures thereof.

**9.** A composition according to the preceding claim wherein the non-ionic surfactant comprises a fatty alcohol preferably an alkoxylated alcohol comprising from 6 to 16 carbon atoms and from 2 to 12 alkoxy groups, preferably from 4 to 10 ethoxy groups.

**10.** A composition according to any of the preceding claims wherein the solvent is selected from the group consisting of glycol ethers, diols and mixtures thereof.

**11.** A composition according to any of the preceding claims wherein the solvent is selected from the group consisting of diethylene glycol butyl ether, di(propylene glycol) methyl ether and mixtures thereof.

**12.** A composition according to any of the proceeding claims wherein the solvent and the surfactant are present in a weight ratio of from 10:1 to 1:10.

**13.** A composition according to any of the preceding claims wherein the composition further comprises a polymer.

**14.** A composition according to any of the proceeding claims wherein the composition has a pH of from about 2 to about 7 as measured at 25°C.

**15.** A composition according to any of the preceding claims wherein the composition is in the form of a clear liquid.

**16.** A composition according to any of the preceding claims wherein the surfactant is a non-ionic surfactant preferably an ethoxylated alcohol, the solvent is selected from the group consisting of diethylene glycol butyl ether, di(propylene glycol) methyl ether and mixtures thereof and $R^2$ is a carbon chain comprising 6 to 10 carbon atoms.

**17.** A composition according to any of the preceding claims wherein the composition is in concentrated form or in the

form of a ready-to-use spray.

**18.** An article treated with a composition according to any of claims 1 to 16 wherein the article is in the form of a disposable or partially reusable substrate comprising one or more nonwoven layers and preferably the substrate has a load factor of from about 3 times to about 10 times of composition per gram of nonwoven substrate.

**19.** A method of sanitizing a hard surface comprising the step of contacting the surface with a composition according to any of claims 1 to 17 and optionally but preferably wiping the surface with a substrate.

Europäisches Patentamt
European Patent Office
Office européen des brevets

# EUROPEAN SEARCH REPORT

Application Number
EP 22 15 6708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOONDAN NAUSHEEN ET AL: "A study of the antibacterial activity ofl-Phenylalanine andl-Tyrosine esters in relation to their CMCs and their interactions with 1,2-dipalmitoyl-sn-glycero-3-phosphocholine, DPPC as model membrane", MICROBIOLOGICAL RESEARCH, FISCHER, JENA, DE, vol. 169, no. 9, 4 March 2014 (2014-03-04), pages 675-685, XP029006635, ISSN: 0944-5013, DOI: 10.1016/J.MICRES.2014.02.010 * the whole document * ----- | 1-19 | INV. A01N25/02 A01N25/20 A01N37/02 A01P1/00 |
| X | CN 105 433 045 A (QUANJIAO TIANRUN ECOLOGICAL FARMING PROFESSIONAL COOP) 30 March 2016 (2016-03-30) * the whole document * ----- | 1-3,6,7, 10, 12-14,17 | |
| | | | TECHNICAL FIELDS SEARCHED (IPC) |
| | | | A01N |

The present search report has been drawn up for all claims

| Place of search | Date of completion of the search | Examiner |
|---|---|---|
| Munich | 4 July 2022 | Lorenzo Varela, M |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 15 6708

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2022

| Patent document cited in search report | Publication date | Patent family member(s) | Publication date |
|---|---|---|---|
| CN 105433045 A | 30-03-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 16184415 A
- US 20190055496 A
- US 2082275 A
- US 2702279 A
- US 2255082 A
- EP 2272942 A
- EP 2025743 A
- US 08479096 B
- US 5549589 A
- US 5550167 A
- US 370695

### Non-patent literature cited in the description

- *CHEMICAL ABSTRACTS,* 3380-34-5